(19) Europäisches Patentamt
European Patent Office
Office européen des brevets

(11) Publication number: 0 041 304 A1

(12) # EUROPEAN PATENT APPLICATION

(21) Application number: 81200586.6

(22) Date of filing: 27.05.81

(51) Int. Cl.³: B 65 B 43/46
B 65 G 59/10

(30) Priority: 02.06.80 NL 8003200
11.05.81 NL 8102289

(43) Date of publication of application: 09.12.81 Bulletin 81/49

(84) Designated Contracting States: DE FR GB

(71) Applicant: Moba Holding Barneveld B.V.
Stationsweg 117
NL-3771 VE Barneveld(NL)

(72) Inventor: van Kattenbroek, Hendrik Jan
Potgieterstraat 49
NL-3771 GW Barneveld(NL)

(74) Representative: de Wit, Gerard Frederik, Ir.
Breitnerlaan 146
NL-2596 HG Den Haag(NL)

(54) **Device for delivering an object from a stack.**

(57) A device for delivering the lowermost object (2a) from a stack, having bearing members (14) movable in a direction perpendicular to said stack, which members are adapted to support edges of said lowermost object, separation members (11) to be inserted between the lowermost and the lowermost but one object when the stack rests on the bearing members and lifting members (18) supporting the stack when the separation members are retracted from the stack, preferably relieving members (4) being present above the separation members to support the weight of the stack above the relieving members.

EP 0 041 304 A1

./...

Croydon Printing Company Ltd.

FIG.1

2
1
4
3
5
10
9
11
15
14
13
12
2b
2a
20
30
29
21
23
28'
27
28
25
26
31
22
24
38
37
34
42
39
40
32
33

Device for delivering an object from a stack.

The device relates to a device for delivering an object from a stack, provided with bearing members that can support the edges of the lowermost object of the stack, separation members that can be inserted between the lowermost object and the one but lowermost object of the stack and a driving means for each of said member types. Such a device is described in the United States Patent 3,741,410. In this known device the bearing members and the separation members are part of a helix member having a vertical axis.

Another device for delivering objects from a stack has been described in the Dutch Patent Specification 125,019. In this known device a stack of egg trays is supported by the downward protrusions of the lowermost tray at the moment the separation members are inserted into the stack.

These and many other known devices for delivering objects from a stack may encounter difficulties if for instance the objects show form or dimension deviations, which may consist in damages to the rims or edges, somewhat curved or waving surfaces or lines that should be plane or straight, vulnerable material such as moistened cardboard, if the objects stick together too strongly which may be due to the condition of the material of the objects, but also in compression of the stack occurring during handling. These difficulties may cause the device to be disabled or the object to be damaged or both.

In all devices of the type specified it is a problem to insert the separation members at the right place and to make sure that at the moment they are withdrawn the object supported by them does not weigh too heavy on them,because otherwise it can be damaged because the almost completely withdrawn separation members have only a very small supporting surface for the object.

A further problem that may occur is, that if an object for any reason becomes ill-positioned, for instance because at one side it is pulled downward and at the other it still rests on the separation members, the device should correct this fault and reposition the object in the right position. The invention aims to overcome the above indicated difficulties or at least to reduce the frequency with which they occur in a considerable way.

A further aim of the invention is to procure a device of the described type, that is very reliable and can better handle objects showing irregularities in form, condition of the objects and/or the material of the objects and material adhesion.

The above objects are in principle obtained by providing that lifting members for lifting the lowermost object of the stack are provided, that the separation members are movable in a direction perpendicular to said stack, that the driving means for the separation members is adapted to withdrawn them from the stack at the moment the lifting members are active and to insert them into the stack at the moment the stack is supported by the bearing members, said bearing members being movable in a direction perpendicular to the stack.

A further enhancement of the working of the device can be obtained by providing relieving members fullfilling also a supporting function. This can be realized in a simple way in providing that relieving members cooperating with the stack above the separation members for supporting the weight of the object in the stack above the relieving members are provided having lips pivotable about shafts parallel to edges of the objects, which relieving members in their inactive position tilt downwardly towards the stack and can be pivoted upwardly from this position.

A very heigh stack is possible when according to a further elaboration of the invention is provided that relieving members are present at different height positions of the stack.

For some types of objects it may be important to have the lowermost object loosened from the one but lowermost as well in the centre of the objects as at the rims. To grip the objects in their central region can according to a further elaboration of the invention be supported by depressing edge or rim parts of the lowermost object. With the invention this can easily be realized in providing that some of the separation members are movable downward.

A favourable embodiment hereof exists in that the downward movable separation members are provided with a cam surface cooperating with the bearing members.

In the drawing is:

fig. 1 a front view, partially in section of a device according to the invention;
fig. 2 a side view, also partially in section,of the device according to fig. 1;
fig. 3 a detail of the driving mechanism of some parts of the device;
fig. 4 and 4 schematical views of the driving means of the gripping members;
fig. 6 a scheme of the working cycle of the device shown in the preceding figures;
fig. 7 a plan view of a detail elucidating a further elaboration of the invention;
fig. 8 a side view of the detail of fig. 7 in a first position; and

fig. 9 the view of fig. 8 of the said detail in a further position.

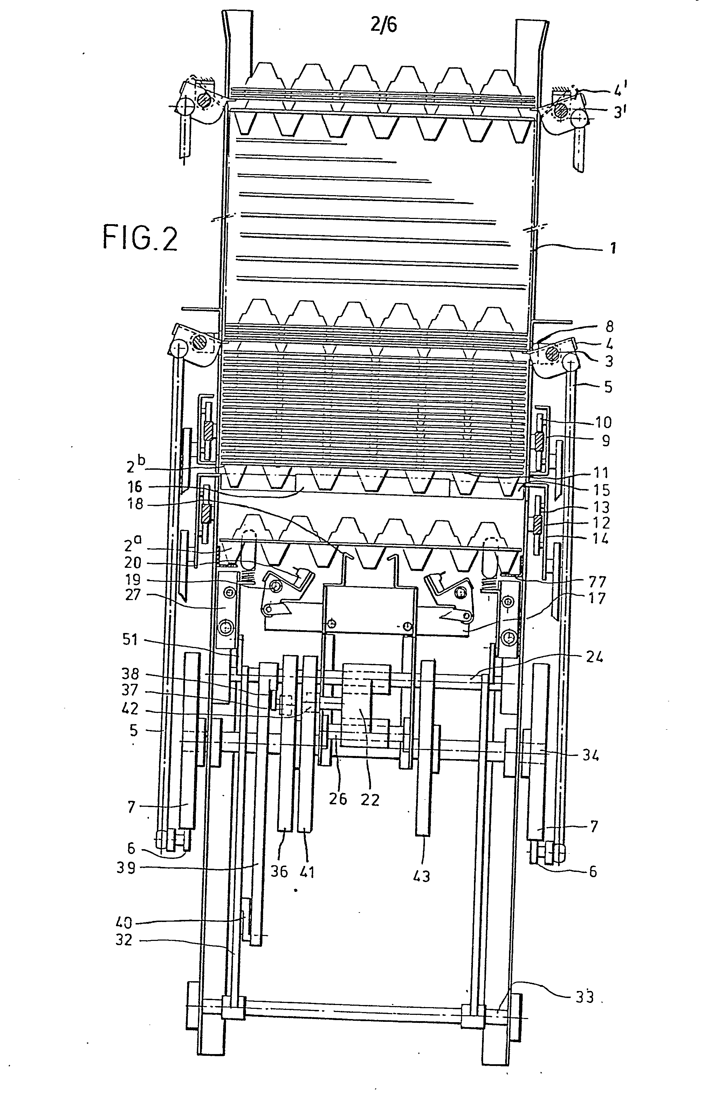

In the drawing reference 1 indicates a sheath for egg trays 2, the lowermost of which has been indicated with 2a and the lowermost but one with 2b. In fig. 2 a situation occurring somewhat further on in the working cycle has been shown, in which the lowermost tray has already been loosened from the stack and moved downward.

At the side of the sheath 1 shafts 3 are mounted supporting relieving members 4, which by means of a link 5 are connected to a follow roller 6 running on a cam 7.

According to a further elaboration of the invention the shafts 3 with the relieving members 4 can be repeated on a greater height, as has been indicated with 3' and 4'.

The relieving members 4, which tilt downwardly in the direction towards the stack and at their ends are provided with a lip 8 that in the shown active position is horizontally directed, can pivot from this position until the lips are almost outside the stack or at least let the stack pass unimpededly, as schematically has been shown, for the relieving members 4' pivoting about the shafts 3'.

Further rails 9 are fixedly connected to theath 1, on which by means of runner wheels 10 separation members 11 can move. On further rails 12 the bearing members 14 are movable by means of running wheels 13, each member 14 having a support profile 15 provided with a rectangularly bent small plate 16 connected to it, of which the upper surface is located above the support profile 15 in order to facilitate bringing in of the separation members 11, as will be explained further on.

A fram 17 bearing at its upper side angularly bent strips 18, which serve as lifting members and supporting shafts 19 for gripping members 20 with prick pins 7b, is connected to two parallel links 21 and 22 having fixed pivot shafts 23 and 24 resp., which with the shafts 25 and 26 resp. attached to

0041304

the frame 17 form a parallelogram guiding mechanism.

Further a discharge mechanism is present, formed by a sliding member 27, that can slide on bars 28 and 28' and at its upper side bears a driving finger 30 that is yieldable by means of a spring 29.

The sliding member 27 is by means of a link 31 connected to an activation rod 32 pivotable about a shaft 33.

The mechanism is driven by a shaft 34 that with a driving mechanism that not has been shown rotates one revolution for each working stroke of the device. The driving member 27, consequently of rod 32 occurs from shaft 34 by means of a cam 36 on which a follow roller 37 runs, which is connected to a rod 38 forming with a rod 39 an angle bar that is pivotable about shaft 24. The rod 39 is coupled to the rod 32 by means of a link 40.

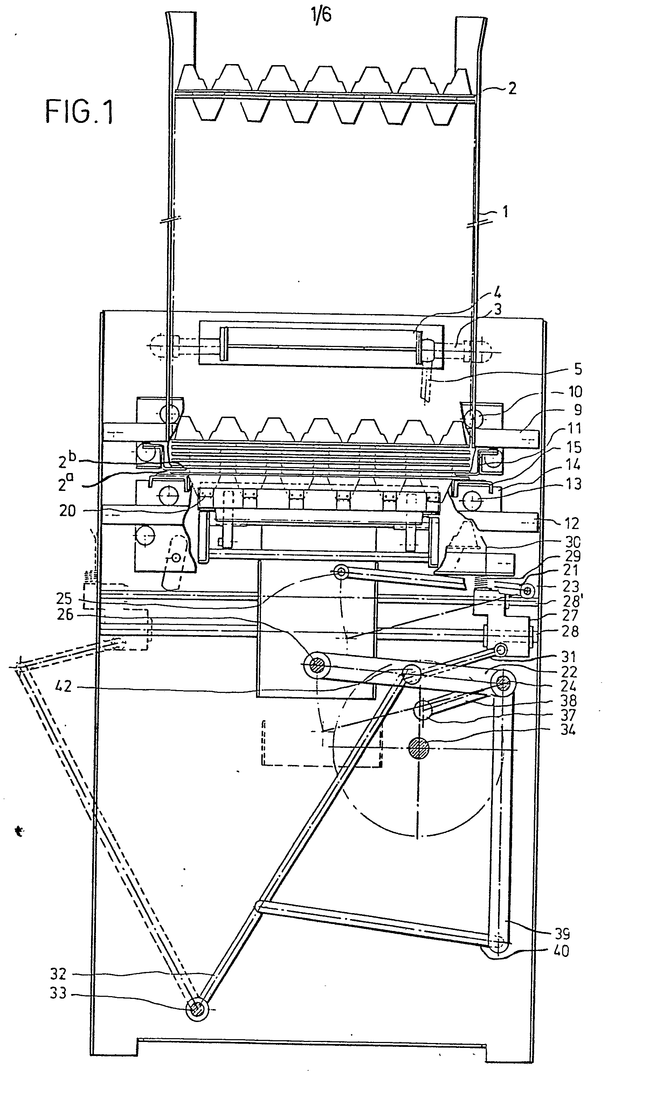

Further the shaft 34 supports a cam 41 on which a follow roller 42 runs, that is connected to an arm 22, that by means of the shaft 26 supports the frame 17. It is remarked that the frame 17 and the shaft 26 have been shown in fig. 2 in a lower position than in fig. 1.

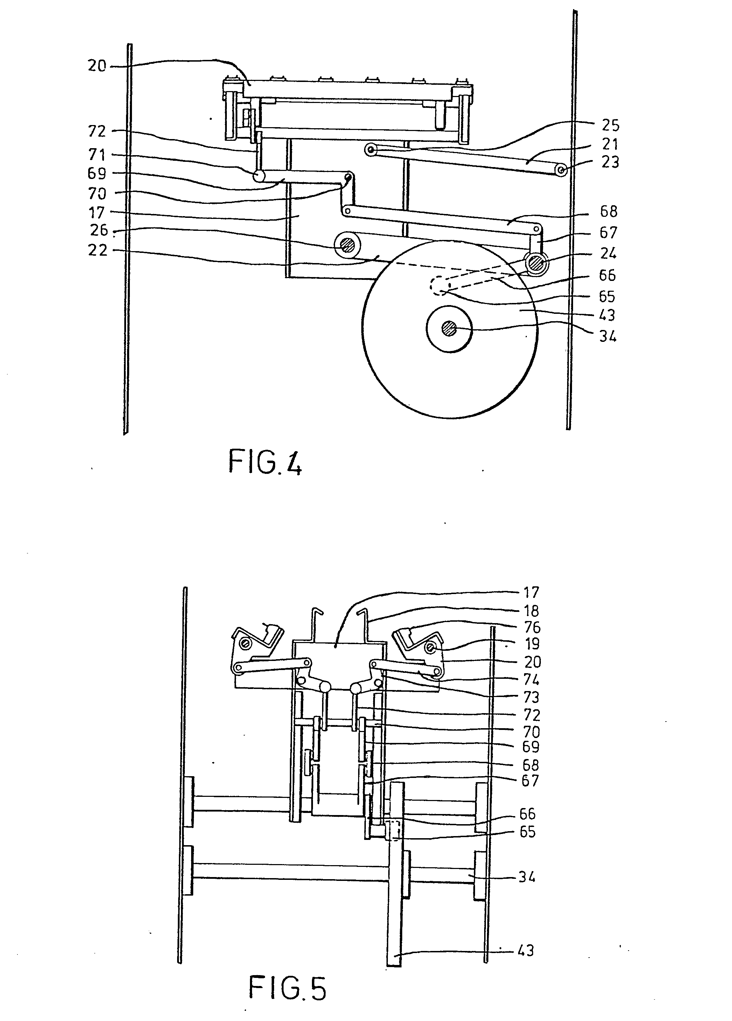

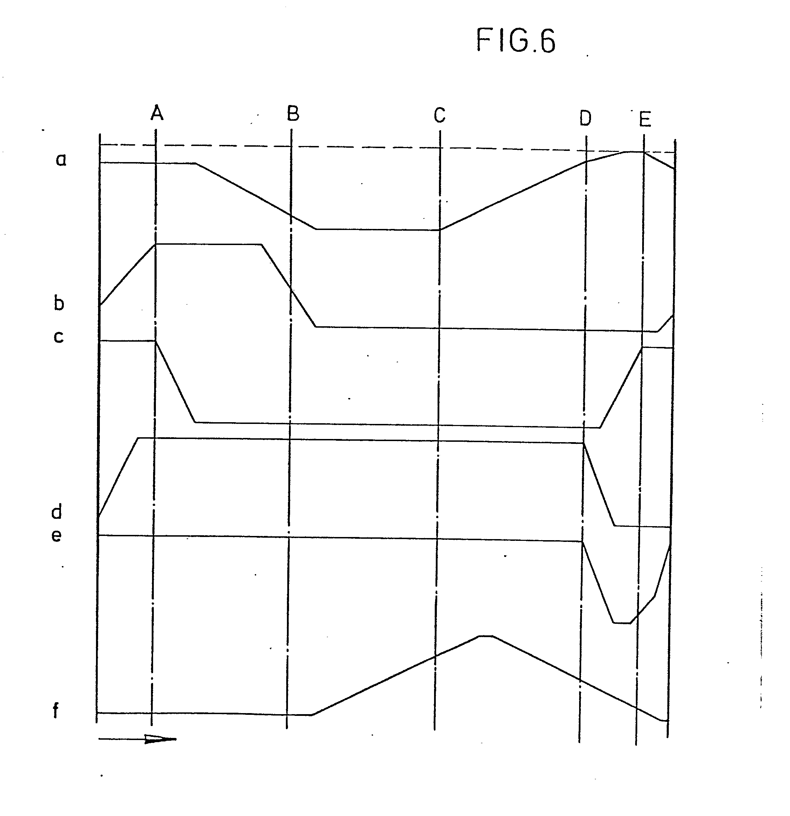

Further on the shaft 34 a cam 43 is present, the coupling rods cooperating with it being shown in fig. 4 and 5. Its purpose is the driving of the gripper members 20.

Also for clarities sake in fig. 2 has not been shown, that the cam disc 7 in fact is in triplicate and that the activating rods for the separation members 11 and the bearing members 14 cooperate with it.

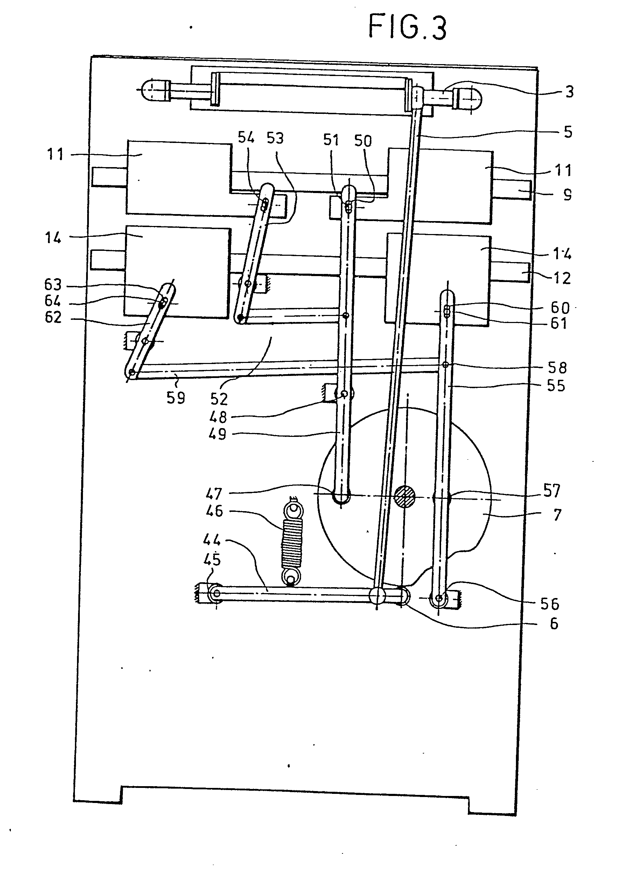

This has been further elucidated in fig. 3 in which the same members have been indicated with the same references as in fig. 1 and 2.

As has been shown, the connection between the cam follow roller 6 and the link 5 is provided by means of an arm 44 having a fixed pivot point, which arm is kept in engagement with the cam 7 by a tension spring 46. Said spring allows the relieving members to be pivoted clockwise in fig. 2.

Further a cam follow roller 47, cooperating with a non shown surface of the triplicate cam 7, is connected to a rod 49 pivotable about pivot point 48 and at its upper side provided with an oblong hole, in which protrudes a coupling pin 51 of the separation member 11 shown on the right side in fig. 3. With the rod 49 further a link 52 is connected that is pivotably coupled to a rod 53 that is pivotable about a fixed pivot point and by means of an oblong hole cooperates with the coupling pin of the left separation member 11.

A coupling rod 55 is pivotable about a fixed point 56. The rod 55 supports a follow roller 57 cooperating with a further cam surface of the cam 7 and is at 58 coupled to a link 59 and by means of a pin 61 protruding into an oblong hole 60 with the right bearing member 14.

By means of the link 59 and the pivotably mounted rod 62 connected to it the left bearing member 14 is controlled via an oblong hole 63 and a pin 64 protruding into it.

The members 49, 52 and 53 form a reversing mechanism by which the separation members 11 move symmetrically towards each other andaway from each other. The members 55, 59 and 61 form also a reversing mechanism, by which the bearing members 14 move at the same time away from or towards each other.

The activation of the gripper members mounted to the frame 17 is further elucidated on hand of fig. 4 and 5. On a cam 43 that schematically has been shown as a circle runs a follow roller 65, that is rotatably mounted to the end of an arm 66. This arm is pivotable about the shaft 24 and fixedly connected to an arm 67, which by means of a link 68 is coupled to an angle 69 having a pivot 70 that is mounted to the frame 17.

0041304

As more clearly is shown in fig. 5, the arm 67, the link 68 and the angle bar 70 are duplicated. With the end 71 of the angle bar 69 a link 72 is connected that is connected to an angle bar 73 coupled to an activating rod 74 for the gripper member 20 that is pivotable about a shaft 19 and provided with prick pins 76. Because the length of arm 68 equals that of arm 22, the ends of the arm 68 and the pivot shafts 26 and 24 form almost a parallelogram, so that the up and down movement of the frame 17, caused by arm 22 does not change the position of the gripper members 20. If, however, the follow roller 65 is moved this causes via arm 66, arm 67, link 68, angle bar 69 and link 72 the gripper members 20 to pivot about their shafts 19.

In fig. 4 and 5 a number of parts that are shown in fig. 1 and 2 have been omitted, but the parts shown have been indicated with the same references.

The working of the device described is in the following elucidated on hand of fig. 6.

Graph a shows the height position of the frame 17 with the lifting members 18 and the gripper members 20 with prick pins 7b.

Graph b shows the activation of the gripper members, the highest level of the graph indicating engagement of the prick pins with an object and the lowest level indicating that they are completely free from each other.

Graph c relates to the bearing members 14 in which the high level of the graph indicates the position in wich the bearing members are within the region of the stack, whereas the low level indicates, that they are outside the stack.

Graph d relates to the separation members 11, and the high level of the graph corresponds with the position in which the separation members protrude into the stack.

Graph e shows the position of the relieving members 4. At the high level of the graph these members are active whereas at the low level they are not active consequently in the position indicated for the relieving members 4' with interrupted lines.

Graph f indicates the position of the discharge members 30, the low level of this graph corresponding to the position shown in fig. 1 with solid lines.

In the beginning of the working of the device the lift members 18 are positioned about 7 mm below the lowermost object, in the case shown the egg tray 2a.

The gripper members 20 are then active, but when the position indicated with reference A in fig. 6 has been reached they are in full engagement with two rows downwardly directed protrusions of the lowermost egg tray.

In the beginning of the cycle the bearing members 14 (graph c) are located within the region of the stack and bear the stack below the lowermost relieving members 4.

The relieving members 4 are active in the high level part of graph e and remain so until near to the end of the cycle.

Also the discharge members 30 are in the starting position indicated with the low part of graph f.

When in the time period from the beginning until moment A the gripper members 20 have been activated (graph e) and the separation members 11 have been brought into the stack (graph d) the bearing members 11 begin to withdraw themselves (graph e) and when this has happened also the lift members 18 are lowered (graph a). Herewith the lowermost tray 2a is taken along. Before the tray 2a reaches its lowermost position the gripper members 20 are deactivated (position B in fig. 6), so that the tray becomes to rest on a support mounted for that purpose and having the form of two angle profiles 77, after which it is discharged towards the left in fig. 1 by the discharge members 30 (graph f) still supported by said profiles.

In the mean time the lift members with the grippers 20 begin to move upward again as is shown by graph a, position C. When they are near to the end of their upward movement (position D) the separation members 11 (graph d) are retired, the one and other being such, that when the ends of the separation members have come near to the edge of the object complete relief of the separation members is attained, because the lift members 18 take over the bearing function. By reason of this the bearing members 14 can be brought under the stack. In the mean time the relieving members start to move backward, but because the lower part of the stack is already supported by the lift members and has even been lifted a little this withdrawal of the relieving members has no influence. When thereafter (postion E) the lift members (graph a) are moved downwardly again the relieving members (graph e) are moved upward at the same time and take over the function of bearing the part of the stack positioned above them, whereas the bearing members 14 bear the lower part of the stack.

Inserting the separation members 11 (before A) happens in the period in which the bearing members 14 bear the tray. The upwardly protruding small plate 16 of these bearing members make sure that at the sides of plate 16 more space is present for receiving the separation members 11.

When for some reason a tray comes in a wrong position, for instance because adheres so fixedly to a tray below it, that is taken along by the gripper members, that he goes along with the latter at one side and for instance at its other side remains resting on the separation members 11, this tray will not be discharged well. When, however, in the next cycle the lift members 18 are moved upward this tilting tray will be brought in its right position, so that the disturbance that occurred in the device, is automatically corrected.

The sheath 1 has been shown in a disrupted way in fig. 1 and 2. The invention enables the use of very high stacks, the relieving members 4 and the fact that never a falling or shocking movement occurs make a great stack height allowable, without causing too great stress on the lowermost tray at the separation members (damaging the tray for instance) or jamming of the stack. Moreover the relieving members 4 serve, as practice has shown, the purpose of pre-loosening the trays, whereas further they enhance the good working of the device and consequently the security that always only one tray is discharged.

The possibility tp use very high stacks has in many instances important advantages, for instance if one wants in view of the organisation of the plant feed the trays from above.

If the trays have to be removed from the device this is possible in upward direction, because the relieving members can pivot against the action of spring 46 (fig. 3) so far that these members do not impede the upward movement of the trays.

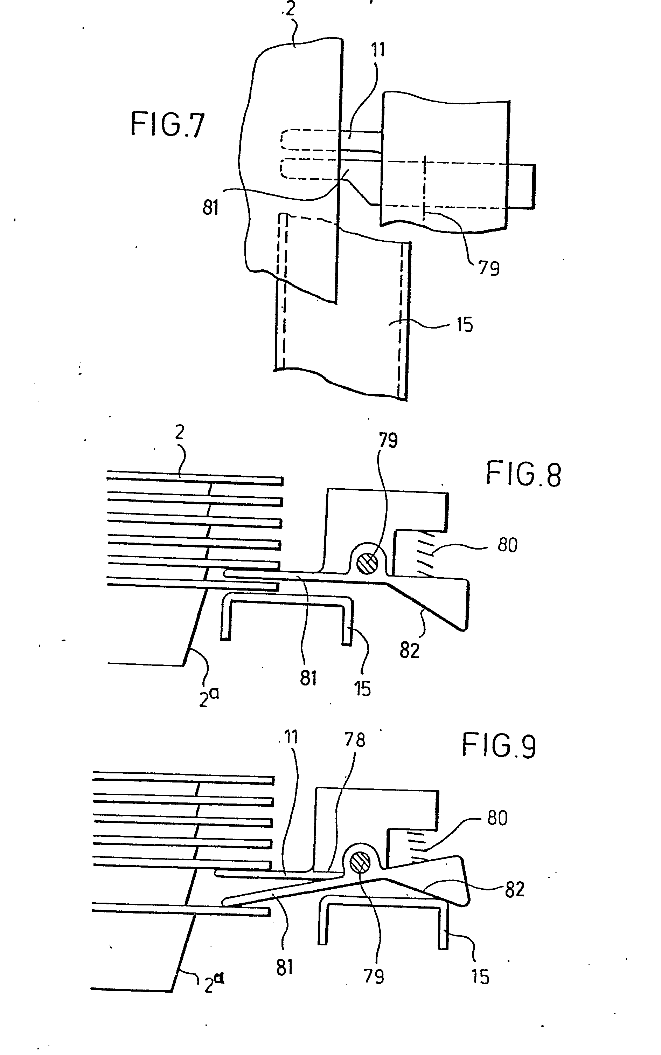

As has been shown in fig. 7-9 inclusive it is possible to give the separation members the additional task to press the edges of the lowermost object downward. This may have considerable advantage in that it may happen that the gripper members which are mainly active in the central part of the object are not able to loosen the edge of the lowermost object. The downward movement of this central part may cause the object to deform when the edge parts stick to the object above them. This deformation may cause a horizontal stress in the object causing it to adhere even stronger to its upper neighbour. In that instance even a moderate depression force on the edge may have great effect.

In fig. 7-9 inclusive aside of a normal separation member 11 a tiltable one 81 has been shown. Member 81 is pivotable about a shaft 79, fixedly connected to member 11. It is provided with a cam surface 82 that can cooperate with the profile 15 of a bearing member 14. A spring 80 normally

0041304

keeps the member 81 in the position of fig. 8, in which it engages an abutment surface 78, but when profile 15 moves outwardly it engages cam surface 82 and pivots member 81 against the action of spring 80.

The movemebt of profile 15 and frame 17 is such controlled, that the left end of member 81 moves at the same time and with the same velocity downwardly as frame 17 in the beginning of its movement. As soon as tray 2a is loose from the stack no further downward movement of member 77 is necessary.

In the above the invention has been described as a device for taking away the lowermost tray of a stack of trays. Such a device may be called a denester. The invention, however, is of equal use for other objects, such as collapsable boxes which may have a considerable weight for a predetermined stack height, and nevertheless can be handled by the invention without damage.

Consequently the invention provides a device that is suitable for many types of objects, prevents damage of objects at the moment of retraction of the separation members and allows a practically unlimited height of the stack. With very high stacks it may be desired to apply a number of relieving members at different height positions, specially if the objects tend to be pressed together.

In the shown embodiment always one pair of relieving members at opposite sides of the sheath have been shown, but it will be clear that relieving members may also be applied at the other sides of the sheath. Also the invention is not limited to a sheath having a rectangular cross section but can be applied to any cross section shape provided with relieving members are adapted to said shape.

Finally it is remarked that the separation members are inserted into the stack at the moment that the edge or rim of the lowermost object is supported by the bearing members, so that an exact height position of said edge or rim is obtained.

Claims:

1. Device for delivering an object (2a) from a stack (2), provided with bearing members (14) that can support the edges of the lowermost object (2a) of the stack, separation members (11) that can be inserted between the lowermost object and the one but lowermost object (2b) of the stack and a driving means (55, 59, 62, 57, 7; 49, 52, 53, 47, 7) for each of said member types characterized in that lifting members (18) for lifting the lowermost object of the stack are provided, in that the separation members are movable in a direction perpendicular to said stack and in that the driving menas (49, 52, 53, 47, 7) for the separation members is adapted to withdraw them from the stack at the moment the lifting members (18) are active and to insert them into the stack at the moment the stack is supported by the bearing members (14), said bearing members being movable in a direction perpendicular to the stack.

2. Device according to claim 1 characterized in that relieving members (4) cooperating with the stack above the separation members for supporting the weight of the object in the stack above the relieving members are provided having lips pivotable about shafts parallel to edges of the objects, which relieving members in their inactive position tilt downwardly towards the stack and can be pivoted upwardly from this position.

3. Device according to claim 1 or 2 characterized in that relieving members are present at different height positions of the stack.

4. Device according to any of the claims 1-3, characterized in that the relieving members yield in upward direction.

0041304

5. Device according to any of the claims 1-4, characterized in that gripper members (20) are present which are vertically movable in unison with the lifting members (18).

6. Device according to any of the preceding claims, characterized in that some of the separation members are movable downward.

7. Device according to claim 6 characterized in that the downward movable separation members are provided with a carm surface cooperating with the bearing members.

FIG.1
2
1
4
3
5
10
9
11
15
14
13
12
2b
2a
20
30
29
21
23
28'
27
28
25
26
31
22
24
42
38
37
34
39
40
32
33

FIG.2
4'
3'
1
8
4
3
5
10
9
2b
11
16
15
18
13
12
2a
14
20
19
77
27
17
51
24
38
37
42
5
34
26
22
7
7
6
6
39
36
41
43
40
32
33

FIG.3

3
5
54
53
51
50
11
11
9
14
14
12
63
64
62
60
61
58
59
52
55
48
49
47
57
46
7
44
45
56
6

0041304

20
72
71
69
70
17
26
22
25
21
23
68
67
24
66
65
43
34


FIG.4

17
18
76
19
20
74
73
72
70
69
68
67
66
65
34
43


FIG.5

FIG.6

A
B
C
D
E
a
b
c
d
e
f

FIG.7
2
11
81
79
15
FIG.8
2
79
80
81
15
82
2a
FIG.9
11
78
80
82
81
79
15
2a

European Patent Office

**0041304**

Application number

EP 81 20 0586

# EUROPEAN SEARCH REPORT

## DOCUMENTS CONSIDERED TO BE RELEVANT

| Category | Citation of document with indication, where appropriate, of relevant passages | Relevant to claim |
|---|---|---|
| DA | NL - C - 125 019 (VAN KATWIJK'S INDUSTRIEEN)<br>* Column 3, line 30 - column 4, line 3; figure 2 *<br>-- | 1,5 |
| DA | US - A - 3 741 410 (EKCO)<br>* Column 5, line 27 - column 6, line 7; figures 1-10 *<br>-- | 1,2 |
| A | US - A - 2 885 111 (VANN)<br>* Column 3, line 68 - column 4, line 10; figures 2,3 *<br>---- | 2 |

CLASSIFICATION OF THE APPLICATION (Int. Cl.3)

B 65 B 43/46
B 65 G 59/10

TECHNICAL FIELDS SEARCHED (Int. Cl.3)

B 65 B
B 65 G
G 07 F

CATEGORY OF CITED DOCUMENTS

- X: particularly relevant
- A: technological background
- O: non-written disclosure
- P: intermediate document
- T: theory or principle underlying the invention
- E: conflicting application
- D: document cited in the application
- L: citation for other reasons

&: member of the same patent family, corresponding document

✓ The present search report has been drawn up for all claims

| Place of search | Date of completion of the search | Examiner |
|---|---|---|
| The Hague | 07-09-1981 | CLAEYS |

EPO Form 1503.1 06.78